# EUROPEAN PATENT SPECIFICATION

(11) **EP 3 995 745 B1**
(45) Date of publication and mention of the grant of the patent: **13.03.2024**
(21) Application number: 21205170.0
(22) Date of filing: 28.10.2021
(51) Int. Cl.: F24C 15/02, F16J 15/02

(54) **GASKET FOR FOOD COOKING OVENS**
DICHTUNG FÜR BACKÖFEN
JOINT POUR FOURS DE CUISSON

(30) Priority: 04.11.2020 IT 202000026293
(43) Date of publication of application: 11.05.2022
(73) Proprietor: P.O.S.A. - S.p.A., 20861 Brugherio (Monza Brianza) (IT)
(72) Inventor: CARMELLI, Alessandro, 20093 Cologno Monzese (Milano) (IT); GALBUSERA, Diego, 24030 Terno D'Isola (Bergamo) (IT); SANTUCCI, Sergio, 20015 Parabiago (Milano) (IT); VALOTA, Andrea, 20019 Settimo Milanese (Milano) (IT)
(74) Representative: Mazzitelli, Maria

(56) References cited:
- EP-A1- 2 330 356
- DE-A1- 4 437 838
- DE-A1- 10 044 376
- US-A- 5 095 657

## Description

The subject of the present invention is a gasket in elastomeric material for ovens for cooking food, in particular for industrial ovens.

Many of the industrial ovens currently available on the market are equipped with a system of self-cleaning, with feeding of detergent fluids, which make them, in some respects, similar to a dishwasher.

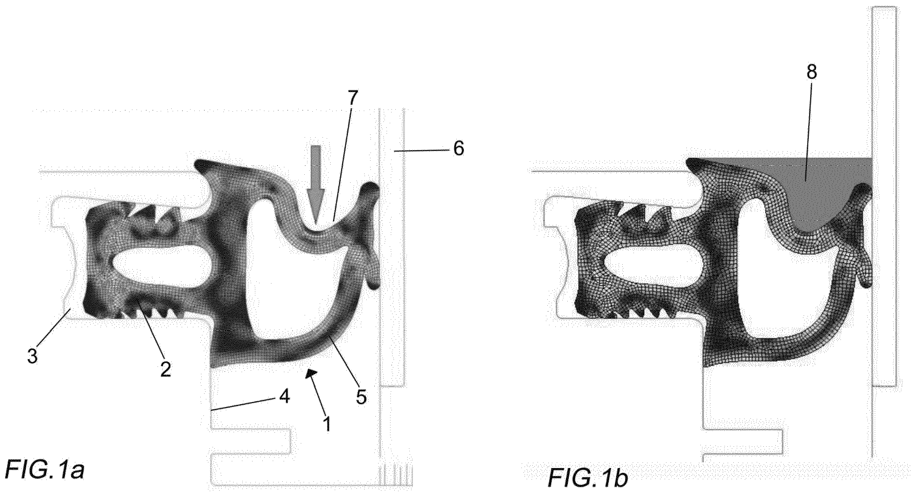

These ovens for cooking food are equipped with a silicone sealing gasket, in the form of a frame, made by "welding", by co-vulcanising separate corners, four rectilinear extruded sections, all having the same cross section, such as for example shown in the accompanying Figure 1a relating to the lower crosspiece, which is the one most stressed.

The gasket denoted overall by reference numeral 1 is mounted by inserting the hooking foot 2 in a slot 3 formed in the front 4 of the oven, leaving the tubular head 5 thereof to protrude which works in hermetic abutment on the inner surface 6 of the door.

As can be seen, in condition of use, a pocket 7 is formed, centrally whereto there is maximum load concentration determining a deformed shape indicated by the arrow, in the silicone material which constitutes it. In this pocket 7 material 8 tends to accumulate, deriving from the cooking of food or from washing, as shown in Figure 1b, which creates major hygiene problems.

In addition to the evident hygiene problems, particularly greasy food and/or chemically aggressive washing agents generate an accumulation on the inside which is deposited through gravity in the pocket 7 chemically attacking the elastomeric component and contributing to determining a rapid deterioration of the gasket, with possible breakage in the aforementioned point of maximum load concentration in the lower crosspiece. In fact the deposits 8 that are accumulated in the pocket 7 should be removed as soon as possible from the gasket in that the damage is proportional to the time of exposure and to the temperature. Resorting to frequent washes with the use of detergents and rinse aids that also chemically attack the silicone material further contributes to deterioration of the gasket. Another problem of known gaskets is the joining of the four sections that constitute it which, in order to obtain a hollow section joining angle, requires the prior introduction therein of a metal spigot which, at the end of moulding, has to be removed.

The design and construction of the spigot are particularly delicate in that tears of the rubber have to be avoided during the extraction phase. The geometry is therefore relatively simple and all forms of undercutting are to be avoided.

However, this leads to a cavity in the area of the corners which has to be sealed, at least in the area of the foot of the gasket, to avoid the entry of dirt.

EP 2 330 356 A1 describes a gasket for pyrolytic ovens in which cleaning takes place at temperatures much higher than the cooking temperature, even up to 5/600°C, at which a silicone material would not resist. Therefore, the gasket is made at least partially in glass fibre, which is a material resistant to high temperatures. The task of the gasket is to collect and drain the fluids towards the exterior of the oven, preventing them from falling in an uncontrolled manner when the door is opened. For this purpose the gasket has openings through which the fluids, made up of condensation and, to a smaller extent, of steam, are evacuated towards the exterior of the oven. Such a gasket would not be usable in a self-cleaning oven with washing fluids, in which the fluids must not stagnate in the gasket and remain inside the oven.

The object of the present invention is to eliminate the disadvantages of the gaskets for food cooking ovens of the prior art.

More particularly, an object of the invention is to provide such a gasket whose lower crosspiece does not have areas of accumulation of materials during use and washing of the chamber of the oven.

Another object of the invention is to provide such a gasket that has a longer working life compared to the existing ones, for the reduction in the deterioration of the lower crosspiece, which is the element most subject to thermal, chemical and mechanical attacks.

A further object of the invention is to provide such a gasket which ensures an optimal seal.

Yet another object of the invention is to provide such a gasket with more reliable angular joints.

Last but not least an object of the invention is to provide such a gasket that is simple and economical to produce.

These and other objects are achieved by the gasket for food cooking ovens according to the invention which has the features of the appended independent claim 1.

Advantageous embodiments of the invention are disclosed in the dependent claims.

Substantially, the gasket for food cooking ovens according to the invention is made up of a square or rectangular frame, comprising a lower crosspiece, an upper crosspiece and two side uprights, each provided with a stem or foot for hooking in a slot formed in the front of the oven and with a protruding tubular head, with internal cavity, which works in hermetic abutment on the inner surface of the door, wherein said lower crosspiece has a gutter appendage designed to convey the condensation which is formed on the inner surface of the door during cooking of the food and the washing fluids towards the interior of the chamber of the oven.

Further features of the invention will be made clearer by the following detailed description, referred to its purely exemplary and therefore non-limiting embodiments, illustrated in the accompanying drawings, in which:
Figures 1a, 1b are sectioned views of the lower crosspiece of a gasket of the prior art, showing the accumulation of material that occurs in a pocket of the same.
Figure 2 is an extremely schematic plan view of a gasket according to the invention with the overmoulded corners that constitute it, showing the sections of the four sides, to highlight the structural differences of the gasket in its lower crosspiece;
Figures 3a, 3b show the section of the lower crosspiece, respectively in rest condition, before assembly, and in working condition, after assembly and with the door closed;
Figures 4a, 4b are views similar to Figures 3a, 3b of a different embodiment of the gasket in its lower crosspiece;
Figure 5a is an axonometric view of an angular element used for the joining of the sides of the gasket;
Figure 5b is a blown-up view of the angular element of Figure 5a.

In the drawings listed above, identical or similar elements are identified by the same reference numerals.

In the description of the gasket according to the invention the same references introduced in Figures 1a, 1b relating to the prior art will be used.

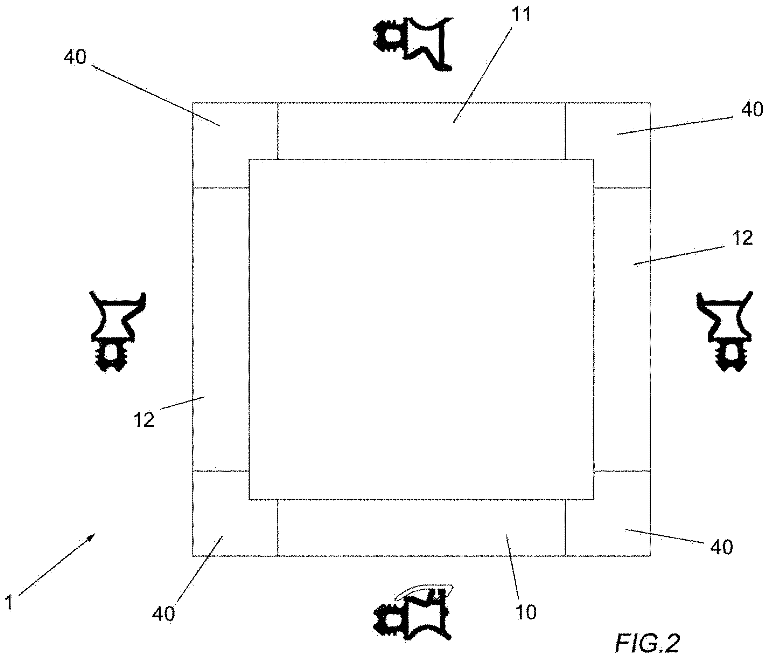

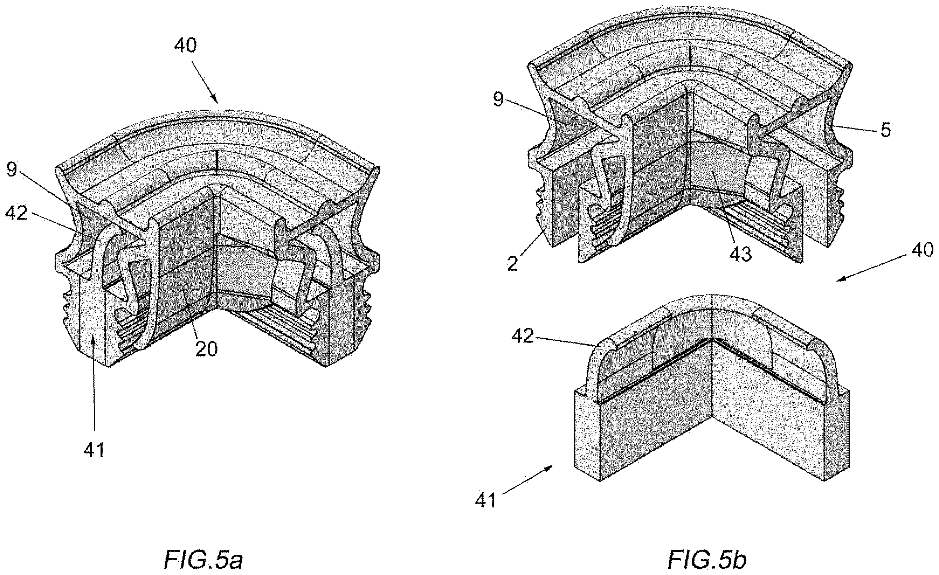

In the plan view of Figure 2 a gasket 1 is schematised, made up of a frame of square or rectangular shape, comprising a lower crosspiece 10, an upper crosspiece 11 and two side uprights 12, as well as four overmoulded joining corners 40, one of which is shown in greater detail in Figures 5a and 5b and will be described here below.

The upper crosspiece 11 and the two side uprights 12 are made up of profiles having the same section, provided with a foot or stem 2 for hooking in a slot 3 formed in the front 4 of the oven and with a protruding tubular head 5, with internal cavity 9, which works in hermetic abutment on the inner surface 6 of the door.

The lower crosspiece 10 has the same configuration as the upper crosspiece and the side uprights (yet in theory could have also a different configuration) and differentiates from them in the provision of a gutter appendage 20 having the purpose of conveying the condensation formed on the door 6 during the cooking of the food or washing towards the interior of the chamber of the oven.

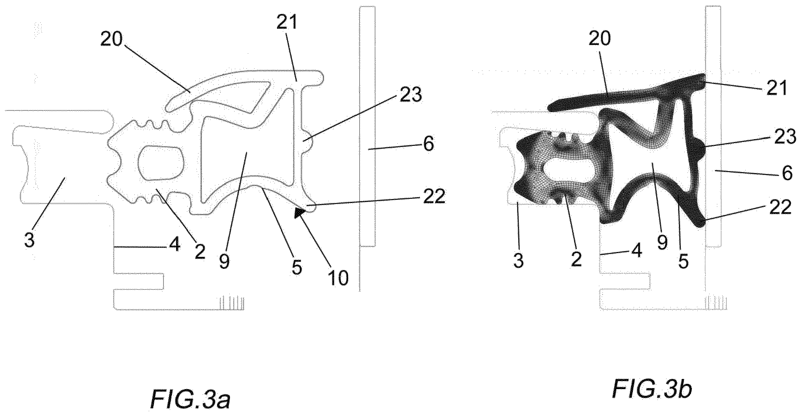

In the embodiment of Figures 3a, 3b, the gutter appendage 20 is integrated in the extruded section of the crosspiece 10 and extends from the front end, intended to come into contact with the inner surface 6 of the door, towards the interior of the oven, with a slight slant downwards, to allow the sliding of the condensation and of other materials which were to deposit on the lower crosspiece. The length of the gutter appendage 20 is such as to cover at least the tubular head 5.

The crosspiece 10 of Figures 3a and 3b could also be made by means of extrusion of two or more different materials (coextrusion).

Such an integrated gutter protects the underlying section under stress of the crosspiece 10 and is without localised stresses with an increase in the working life of the gasket with respect to traditional solutions.

Figure 3b, which shows the gasket in working condition, shows how in its front part, which abuts against the inner surface 6 of the door, a protrusion 21 is provided along the upper edge, which constitutes an extension of the gutter appendage 20, a protrusion 22 along the lower edge and an intermediate protrusion 23, so as to have three points of contact on the door, to improve the seal also in the case of a dirty or encrusted surface.

These three points of contact also occur in the other three sides of the gasket, should profiles of the same configuration be used, as shown in the drawings.

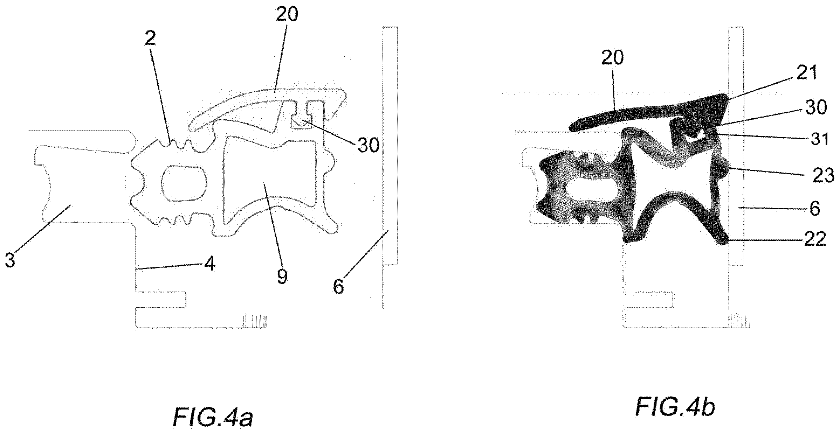

The embodiment of Figures 4a, 4b differs from the previous one due to the fact that the gutter appendage, again denoted by reference numeral 20, is made as a separate part, restrained to the body of the gasket with an arrow-shaped interlocking 30 which interlocks into an appropriate seat 31 formed above the tubular head 5 of the crosspiece 10.

According to this embodiment the gutter appendage 20, which also comprises the protrusion 21, can be made in a specific, possible more "noble", material such as a fluoroelastomer (FKM) which, being resistant to chemical attacks, could give rise to an increase in duration.

Moreover, the gutter appendage 20 can optionally be replaced, when worn, at a lower cost with respect to the replacement of the entire gasket.

Figures 5a and 5b show an angular element 40 for joining the various sides of the gasket, provided with an insert 41 which, fixed to the base of the corner, in the foot 2, performs the function of sealing and moreover, thanks to the presence of a fin 42 which is inserted in the internal cavity 9 of the tubular abutment head 5 ensures support thereof. This system optimises the coupling with the internal abutment plane 6 of the door. The drawings also show a small joining wall 43 between the portion of the angular element 40 designed to join to an upright 12 of the gasket and a section of gutter appendage 20 provided on the other portion of the angular element designed to join up with the lower crosspiece 10, to avoid infiltrations of condensation in the cavity below the gutter appendage 20. Naturally these additional elements would not be necessary in the corners of the union of the upper crosspiece 11 with the side uprights 12.

From what has been disclosed the advantages of the gasket according to the invention appear clear, due to the lack of the pocket for collection of material which is formed in the gaskets of the prior art.

Naturally the invention is not limited to the particular embodiments previously described and illustrated in the accompanying drawings, but numerous detailed changes may be made thereto, within the reach of the person skilled in the art, without thereby departing from the scope of the same invention, as defined in the following claims.

## Claims

1. Gasket in elastomer (1) for food cooking ovens consisting of a square or rectangular frame, comprising a lower crosspiece (10), an upper crosspiece (11) and two side uprights (12), each provided with a foot or stem (2) for hooking in a slot (3) formed in the front (4) of the oven and with a protruding tubular head (5), with internal cavity (9), which is adapted to work in hermetic abutment on the inner surface (6) of the door, **characterised in that** said lower crosspiece (10) has a gutter appendage (20), covering at least the tubular head (5), designed to convey the condensation that forms on the inner surface (6) of the door during cooking of food and the washing fluids towards the inside of the oven chamber.

2. Gasket according to claim 1, **characterised in that** said gutter appendage (20) extends from the end of the gasket, intended to come into contact with the inner surface (6) of the door, towards the inside of the oven, with a slight slant downwards.

3. Gasket according to claim 1 or 2, **characterised in that** said gutter appendage (20) is integrated in the extruded section of the crosspiece (10).

4. Gasket according to claim 1 or 2, **characterised in that** said gutter appendage (20) is made as a separate piece, which is fastened to the body of the gasket with an interlocking (30) which interlocks in a corresponding seat (31) obtained above the tubular head (5) of the crosspiece (10).

5. Gasket according to claim 4, **characterised in that** said gutter appendage (20) is made in a specific material, possibly different from the silicone material from which the gasket (1) is made.

6. Gasket according to claim 5, **characterised in that** said gutter appendage (20) is made by means of a coextrusion process.

7. Gasket according to claim 5 or 6, **characterised in that** said gutter appendage (20) is made in fluoroelastomer (FKM).

8. Gasket according to any one of the preceding claims, **characterised in that** in its front part, which is adapted to abut against the inner surface (6) of the door, there is a protrusion (21) along the upper edge, which constitutes an extension of the gutter appendage (20), a protrusion (22) along the lower edge, and an intermediate protrusion (23), so as to have three points of contact on the glass (6), to improve sealing.

9. Gasket according to any one of the preceding claims, **characterised in that** it comprises an angular element (40), made through overmoulding designed to join the sides of the gasket, provided with an insert (41) fixed in the foot (2), and having a fin (42) which is inserted in the internal cavity (9) of the tubular abutment head (5) ensuring support thereof.

10. Gasket according to claim 9, **characterised in that** said angular element (40) intended to join the lower crosspiece (10) to the side uprights (12) has a section of gutter appendage (20) on its portion designed to join to the lower crosspiece 10, joined with a small joining wall (43) to the portion of the angular element (40) designed to join to an upright (12) in order to prevent lateral infiltrations.

## Patentansprüche

1. Elastomerdichtung (1) für Öfen zum Garen von Lebensmitteln, bestehend aus einem quadratischen oder rechteckigen Rahmen, der einen unteren Querträger (10), einen oberen Querträger (11) und zwei seitliche Pfosten (12) umfasst, die jeweils mit einem Fuß oder einem Zapfen (2) zum Einhaken in einen Schlitz (3), der in dem Vorderteil (4) des Ofens gebildet ist, und mit einem vorstehenden rohrförmigen Kopf (5) mit einem inneren Hohlraum (9) versehen sind, der ausgelegt ist, um in hermetischem Anschlag an der Innenfläche (6) der Tür zu wirken, **dadurch gekennzeichnet, dass** der untere Querträger (10) einen Rinnenansatz (20) aufweist, der mindestens den rohrförmigen Kopf (5) abdeckt, um das Kondensat, das sich an der Innenfläche (6) der Tür während des Garens von Lebensmitteln bildet, und die Waschfluide zum Inneren der Ofenkammer weiterzuleiten.

2. Dichtung nach Anspruch 1 **dadurch gekennzeichnet, dass** sich der Rinnenansatz (20) von dem Ende der Dichtung, das dazu ausgelegt ist, mit der Innenfläche (6) der Tür in Kontakt zu kommen, mit einer leichten Neigung nach unten in das Innere des Ofens erstreckt.

3. Dichtung nach Anspruch 1 oder 2, **dadurch gekennzeichnet, dass** der Rinnenansatz (20) in den extrudierten Abschnitt des Querträgers (10) integriert ist.

4. Dichtung nach Anspruch 1 oder 2, **dadurch gekennzeichnet, dass** der Rinnenansatz (20) als separates Stück hergestellt ist, das an dem Körper der Dichtung mit einer Verriegelung (30) befestigt ist, die in einen entsprechenden Sitz (31) eingreift, der oberhalb des rohrförmigen Kopfes (5) des Querträgers (10) erhalten ist.

5. Dichtung nach Anspruch 4, **dadurch gekennzeichnet, dass** der Rinnenansatz (20) aus einem spezifischen Material hergestellt ist, das sich möglicherweise von dem Silikonmaterial unterscheidet, aus dem die Dichtung (1) hergestellt ist.

6. Dichtung nach Anspruch 5, **dadurch gekennzeichnet, dass** der Rinnenansatz (20) mittels eines Koextrusionsvorgangs hergestellt ist.

7. Dichtung nach Anspruch 5 oder 6, **dadurch gekennzeichnet, dass** der Rinnenansatz (20) aus Fluorelastomer (FKM) hergestellt ist.

8. Dichtung nach einem der vorhergehenden Ansprüche, **dadurch gekennzeichnet, dass** in seinem vorderen Teil, der ausgelegt ist, um an der Innenfläche (6) der Tür anzuliegen, ein Vorsprung (21) entlang des oberen Randes, der eine Verlängerung des Rinnenansatzes (20) bildet, ein Vorsprung (22) entlang des unteren Randes und ein Zwischenvorsprung (23) vorgesehen sind, um drei Kontaktpunkte auf der Scheibe (6) zu haben, um die Abdichtung zu verbessern.

9. Dichtung nach einem der vorhergehenden Ansprüche, **dadurch gekennzeichnet, dass** sie ein Winkelelement (40) umfasst, das durch Umformen hergestellt ist, das dazu bestimmt ist, die Seiten der Dichtung zu verbinden, das mit einem Einsatz (41) versehen ist, der im Fuß (2) befestigt ist, und das eine Rippe (42) aufweist, die in den inneren Hohlraum (9) des rohrförmigen Anschlagkopfs (5) eingesetzt ist, was dessen Abstützung sicherstellt.

10. Dichtung nach Anspruch 9, **dadurch gekennzeichnet, dass** das Winkelelement (40), das dazu bestimmt ist, den unteren Querträger (10) mit den seitlichen Pfosten (12) zu verbinden, einen Abschnitt eines Rinnenansatzes (20) an seinem Teil aufweist, der dazu bestimmt ist, sich mit dem unteren Querträger (10) zu verbinden, der mit einer kleinen Verbindungswand (43) mit dem Teil des Winkelelements (40) verbunden ist, der dazu bestimmt ist, sich mit einem Pfosten (12) zu verbinden, um seitliche Infiltrationen zu verhindern.

## Revendications

1. Joint d'étanchéité élastomère (1) pour fours de cuisson de produits alimentaires consistant en un cadre carré ou rectangulaire, comprenant une pièce transversale inférieure (10), une pièce transversale supérieure (11) et deux montants latéraux (12) dotés respectivement d'un pied ou d'une tige (2) destiné(e) à être accroché(e) dans une fente (3) formée dans la partie avant (4) du four et d'une tête tubulaire saillante (5), avec une cavité interne (9) adaptée pour fonctionner en butée hermétique contre une surface intérieure (6) de la porte, **caractérisé en ce que** ladite pièce transversale inférieure (10) comporte un appendice en gouttière (20) recouvrant au moins la tête tubulaire (5), conçu pour transporter la condensation formée sur la surface intérieure (6) du four pendant la cuisson de produits alimentaires et les fluides de nettoyage vers l'intérieur de la chambre de four.

2. Joint d'étanchéité selon la revendication 1, **caractérisé en ce que** ledit appendice en gouttière (20) s'étend à partir de l'extrémité du joint d'étanchéité, destiné à venir en contact avec la surface intérieure (6) du four, vers l'intérieur du four, avec une légère inclinaison vers le bas.

3. Joint d'étanchéité selon la revendication 1 ou 2, **caractérisé en ce que** ledit appendice en gouttière (20) est intégré dans la section extrudée de la pièce transversale (10).

4. Joint d'étanchéité selon la revendication 1 ou 2, **caractérisé en ce que** ledit appendice en gouttière (20) est constitué d'une pièce séparée, laquelle est fixée au corps du joint d'étanchéité à l'aide d'un interverrouillage (30) verrouillé dans un siège (31) correspondant obtenu au-dessus de la tête tubulaire (5) de la pièce transversale (10).

5. Joint d'étanchéité selon la revendication 4, **caractérisé en ce que** ledit appendice en gouttière (20) est constitué d'un matériau spécifique, éventuellement différent du matériau en silicone constituant le joint d'étanchéité (1).

6. Joint d'étanchéité selon la revendication 5, **caractérisé en ce que** ledit appendice en gouttière (20) est fabriqué à l'aide d'un processus de coextrusion.

7. Joint d'étanchéité selon la revendication 5 ou 6, **caractérisé en ce que** ledit appendice en gouttière (20) est constitué d'élastomère fluoré (FKM).

8. Joint d'étanchéité selon l'une quelconque des revendications précédentes, **caractérisé en ce que** dans sa partie avant adaptée pour buter contre la surface intérieure (6) de la porte, il est prévu une saillie (21) le long du bord supérieur, laquelle constitue une extension de l'appendice en gouttière (20), une saillie (22) le long du bord inférieur, et une saillie intermédiaire (23), de manière à obtenir trois points de contact sur le verre (6), permettant d'améliorer l'étanchéité.

9. Joint d'étanchéité selon l'une quelconque des revendications précédentes, **caractérisé en ce que** celui-ci comprend un élément angulaire (40) réalisé par surmoulage conçu pour relier les côtés du joint d'étanchéité, doté d'un insert (41) fixé dans le pied (2) et comportant une ailette (42) insérée dans la cavité interne (9) de la tête de butée tubulaire (5), assurant le support de celle-ci.

10. Joint d'étanchéité selon la revendication 9, **caractérisée en ce que** ledit élément angulaire (40) destiné à relier la pièce transversale inférieure (10) aux montants latéraux (12) comporte une section d'appendice en gouttière (20) sur sa partie conçue pour relier la pièce transversale inférieure (10), reliée par une petite paroi de jonction (43) à la partie de l'élément angulaire (40) conçue pour être reliée à un montant (12) afin d'empêcher les infiltrations latérales.
